# EUROPEAN PATENT APPLICATION

(11) **EP 1 191 439 A1**
(43) Date of publication of application: **27.03.2002**
(21) Application number: 01921967.4
(22) Date of filing: 20.04.2001
(51) Int. Cl.: G06F 9/46

(54) **COMPUTER SYSTEM AND COMPUTER-READABLE RECORD MEDIUM**

(30) Priority: 26.04.2000 JP 2000126523
(71) Applicant: MITSUBISHI DENKI KABUSHIKI KAISHA, Tokyo 100-8310 (JP)
(72) Inventor: KATAYAMA, Yoshiaki, c/o MITSUBISHI DENKI K.K., Tokyo 100-8310 (JP)
(74) Representative: Pfenning, Meinig & Partner GbR
(86) International application number: JP0103419
(87) International publication number: WO0182074

(57) **Abstract**

When there is a request for acquisition of a resource from a sub-task, a sub-OS checks whether the resource is released by an exclusive control function of a main OS (step ST1) before outputting a request for acquisition of the resource (step ST2). The sub-OS also sequentially may also executes sub-tasks other than the sub-task requesting the resource.

## Description

### TECHNICAL FIELD

The present invention generally relates to a computer system and a computer readable recording medium storing programs for such a computer system, in which a sub-operating system program is executed under a main operating system program so that application programs are executed under the sub-operating system program. The present invention relates more particularly, to improvements in which problems associated with running both the main operating system program and the sub-operating system program in a multitask environment are resolved.

### BACKGROUND ART

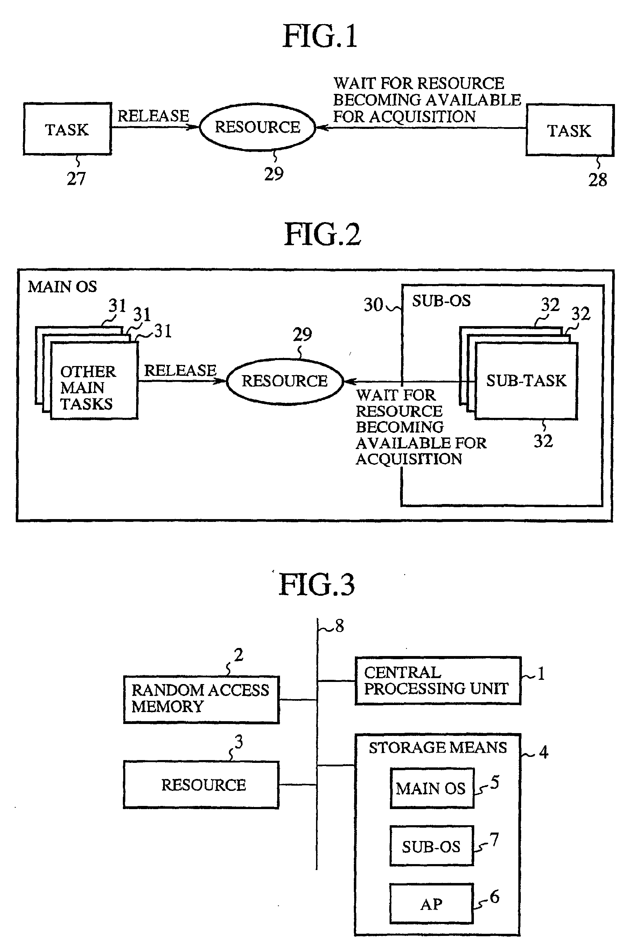

Fig. 1 illustrates how resources are subject to exclusive control in a computer system provided with a multitask operating system. Referring to Fig. 1, reference numerals 27 and 28 indicate tasks generated in the operating system program, and 29 indicates a resource.

A description will now be given of the operation according to the background art. When a request for the resource 29 is output from the task 28 while the resource 29 is being acquired by the task 27, the operating system notifies the task 28 that the resource 29 is being acquired. The operating system manages the requests for acquisition of resource such that, when the use of resource 29 by the task 27 is complete, the operating system notifies the task 28 that the task 28 successfully acquired the resource 29. The process from the task 28 is started in response to this notification.

Since the computer system according to the background art is constructed as described above, a multitask sub-operating system program running under a multitask main operating system program cannot allow multitask operation of application programs running under the sub-operating system program.

The problem with the background art will be described more specifically.

Fig. 2 is a state diagram illustrating execution states occurring in the system according to the background art. Referring to Fig. 2, reference numeral 30 indicates a main task for executing the sub-operating system program, 31 indicates other main tasks, and 32 indicates sub-tasks running under the sub-operating system program. The other reference numerals indicate the same elements as in Fig. 1.

As shown in Fig. 2, it is assumed that the main task 30 for executing the sub-operating system program is executed and the sub-task 32 running under the main task 30 outputs a request for acquisition of the resource 29, while the resource 29 is being acquired by one of the other main tasks 31. Since the resource 29 is already acquired by the other main task 31, the main operating system controls the main task 30 to place it in a state in which it waits for the resource 29 becoming available for acquisition. Accordingly, the entire process of the sub-operating system program is halted until the resource 29 is available for acquisition, preventing multitask operation under the sub-operating system program.

The present invention has been developed to resolve these problems and has an objective of providing a computer system and a recording medium, in which a multitask sub-operating system program executed under a multitask main operating system program allows multitask operation of applications under the sub-operating system program.

### DISCLOSURE OF THE INVENTION

The present invention provides a computer system comprising: a central processing unit; resources accessed by the central processing unit running a program under its control; storage means storing a main operating system program, application programs and a sub-operating system program, the main operating system program being executed by the central processing unit to provide a main task execution function that generates a plurality of main tasks and causes the central processing unit to sequentially run the plurality of main tasks, the main operating system program also providing an exclusive control function effecting, when there is a request from the main task for acquisition of any of the resources, exclusive control on the use of the resources, by allocating the resources to the main tasks in the order of requests, the sub-operating system program being executed as one of the main tasks under the control of the main operating system program to provide a sub-task executing function that generates a plurality of sub-tasks based on the application programs and causes the central processing unit to sequentially run the plurality of sub-tasks, wherein the sub-operating system program provides a resource acquisition management function for checking, when there is a request for acquisition of any of the resources from the sub-task, whether the requested resource is released by the exclusive control function and, when it is determined that the resource is released, outputs a request for acquisition of the requested resource to the exclusive control function, and wherein the sub-task executing function sequentially executes sub-tasks other than the requesting sub-task.

With this construction, when a sub-task executed under a sub-operating system outputs a request for acquisition of a resource, the resource acquisition management function checks whether the resource is released when the request occurs. Only when it is determined that the resource is released, the request for acquisition of the resource is output to the exclusive control function. Accordingly, the main operating system program does not place the main task for executing the sub-operating system in a state in which the sub-operating system waits for the resource becoming available for acquisition.

The sub-task executing function may resume the execution of the requesting sub-task at predetermined intervals.

With this construction, sub-tasks other than that requesting the resource continue to be executed under the main task for executing the sub-operating system. Accordingly, multitask operation under the multitask sub-operating system executed under the multitask main operating system is allowed.

One of the main operating system program and the sub-operating system program may provide a release notification function notifying the sub-task executing function that the requested resource is released so that the sub-task executing function resumes the execution of the requesting sub-task in response to the notification.

The aforementioned aspect of the invention is easy to implement using a timer function or the like.

The sub-operating system program may provide a table generating function that generates a sub-resource table showing acquisition and release status of virtual resources used by the application programs, the sub-task executing function may halt the sub-task that failed to acquire the resource by causing the sub-task to wait for the virtual resource listed in the sub-resource table becoming available, and resume the execution of the sub-task upon detecting that the virtual resource is released, and the release notification function may notify the sub-task executing function that the requested resource is released by the exclusive control function, by releasing the virtual resource.

According to this aspect of the invention, periodical processes are not generated so that, even when a large number of sub-tasks are placed in a wait state in which they wait for the resource becoming available, a sufficient period of time is reserved for the execution of sub-tasks not in the wait state. Thereby, the sub-tasks not in the wait state are executed efficiently.

By providing a sub-resource table, it is not necessary to rewrite programs whenever the type of application program is changed. The change in the application program type is dealt with only by modifying the sub-resource table. An increase or decrease in the number of virtual resources is flexibly and easily accommodated.

The release notification function may be periodically executed under the control of the sub-operating system program.

Accordingly, it is not necessary to add any new function to the main operating system program, while benefiting from the release notification function. This aspect of the invention is implemented under any main operating system program.

The release notification function may be executed based on a software interruption generated in response to a release by the exclusive control function of the resource.

This allows the resource to be acquired immediately when the exclusive control function releases the resource, so that the execution of the sub-task in the wait state is resumed immediately. Accordingly, the sub-tasks are executed efficiently.

Since it is not necessary to execute the sub-task periodically during the execution of the main task related to the sub-operating system, a sufficient time is reserved for the execution of the sub-operating system program even when a large number of sub-tasks are placed in a wait state. Accordingly, the sub-tasks are executed efficiently.

One of the sub-operating system program and the main operating system program may provide a mapping table generating function generating a resource mapping table showing correspondence between the virtual resources and the resources, and the release notification function may identify the virtual resource to be released based on the resource mapping table.

The system according to the this aspect of the invention is flexibly adapted for absence of one-to-one correspondence between the resources and the virtual resources, or increase or decrease in the number of resources and virtual resources, without modifying the programs.

The present invention also provides a computer readable recording medium storing programs causing a computer to provide: a main task executing function generating a plurality of main tasks and causing a central processing unit to sequentially execute the main tasks; an exclusive control function effecting exclusive control on the use of resources by allocating the resources to the main tasks in the order of requests when there is a request for acquisition of the resource; a sub-task executing function generating a plurality of sub-tasks based on application programs and sequentially executing sub-tasks other than the sub-task requesting the resource; and a resource acquisition management function checking, when there is a request for acquisition of the resource from the sub-task, whether the requested resource is released by the exclusive control function, and, when it is determined that the resource is released, outputting a request for acquisition of the resource to the exclusive control function.

With this construction, when a sub-task executed under a sub-operating system outputs a request for acquisition of a resource, the resource acquisition management function checks whether the resource is released when the request occurs. Only when it is determined that the resource is released, the request for acquisition of the resource is output to the exclusive control function. Accordingly, the main operating system program does not place the main task for executing the sub-operating system in a state in which the sub-operating system waits for the resource becoming available for acquisition.

### BRIEF DESCRIPTION OF THE DRAWINGS

Fig. 1 illustrates how resources are subject to exclusive control in a computer system provided with a multitask operating system.
Fig. 2 is a state diagram illustrating a problem with the related art system.
Fig. 3 is a block diagram showing a hardware construction of a computer system according to a first embodiment of the present invention.
Fig. 4 is a diagram showing functions provided by a main OS and a sub-OS according to the first embodiment.
Fig. 5 is a flowchart showing a process performed according to the first embodiment when a sub-task outputs a request for acquisition of a resource.
Fig. 6 is a diagram showing an operation of the computer system according to the first embodiment.
Fig. 7 is a diagram showing functions provided by a main OS and a sub-OS according to a second embodiment of the present invention.
Fig. 8 is a flowchart showing a process performed according to the second embodiment when a sub-task outputs a request for acquisition of a resource.
Fig. 9 is a diagram showing an operation of the computer system according to the second embodiment.
Fig. 10 is a diagram showing functions provided by a main OS and a sub-OS according to a third embodiment of the present invention.
Fig. 11 shows an example of resource mapping table according to the third embodiment.
Fig. 12 is a flowchart showing a process performed according to the third embodiment when a sub-task outputs a request for acquisition of a resource.
Fig. 13 is a diagram showing an operation of the computer system according to the third embodiment.
Fig. 14 is a diagram showing functions provided by a main OS and a sub-OS according to a fourth embodiment of the present invention.
Fig. 15 is a flowchart showing a process performed according to the fourth embodiment when a sub-task outputs a request for acquisition of a resource.
Fig. 16 is a diagram showing an operation of the computer system according to the fourth embodiment.

### BEST MODE OF CARRYING OUT THE INVENTION

Hereinafter, in order to further describe the invention, the best mode of carrying out the invention will be described

### First embodiment

Fig. 3 is a block diagram showing a hardware construction of a computer system according to the first embodiment. Referring to Fig. 3, the system comprises a central processing unit 1 for executing a program, a random access memory 2 in which is set a work area or the like used by the central processing unit 1 while a program is being executed, a resource 3 such as a hardware resource (device driver) or a file accessed by the central processing unit 1 as the program is run, a storage means 4 for storing a program executed by the central processing unit 1, a main operating system (main OS) 5 stored in the storage means 4, an application program (AP) 6 stored in the storage means 4, a sub-operating system program (sub-OS) 7 stored in the storage means 4 and a system bus 8 connecting the elements.

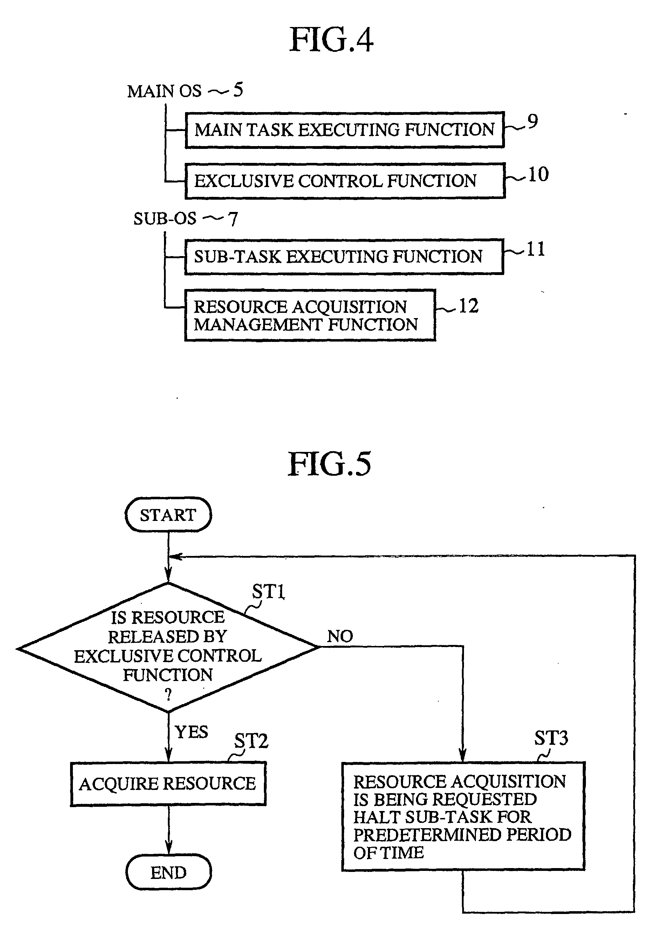

Fig. 4 is a diagram showing functions provided by a main OS and a sub-OS according to the first embodiment. Referring to Fig. 4, reference numeral 9 indicates a main task executing function generating a plurality of main tasks and causing the central processing unit 1 to sequentially execute the generated main tasks, 10 indicates an exclusive control function for effecting exclusive control on the use of the resource 3 by allocating the resource 3 to the main tasks in the order of requests for acquisition, 11 indicates a sub-task executing function generating a plurality of sub-tasks based on the AP 6 and causing the central processing unit 1 to sequentially execute the generated sub-tasks, 12 indicates a resource acquisition management function for checking whether the resource 3 requested by the sub-task is released by the exclusive control function 10, and outputting the resource acquisition request to the exclusive control function 10 when it is determined that the resource is released. When the sub-task is placed in a state in which the sub-task waits for the resource becoming available for acquisition as a result of the process by the resource acquisition management function 12, the sub-task executing function 11 resumes execution of the sub-task in a wait state at predetermined intervals using a timer function (not shown). Otherwise, the sub-task executing function 11 sequentially executes the sub-tasks.

When it is determined that the resource 3 is released by the exclusive control function 10, it means that there are no main tasks that wait for the resource 3 becoming available for acquisition. Contrary, when it is determined that the resource 3 is acquired by the exclusive control function 10, it means that there is a main task that is waiting for the resource 3 becoming available or there is a main task using the resource 3.

A description will now be given of the operation according to the first embodiment.

When the main OS 5 is executed by the central processing unit 1, the main task executing function 9 and the exclusive control function 10 are generated. When the sub-OS 7 or the like is executed in this state, the main task executing function 9 generates the main tasks and causes the central processing unit 1 to sequentially execute the main tasks. When one of the main tasks is to use the resource 3, that main task outputs a request for acquisition of the resource to the exclusive control function 10. The exclusive control function 10 acknowledges the request and immediately allows the requesting main task to acquire the resource 3 when the resource 3 is being released. The requesting main task continues its process by using the resource 3. Conversely, when one of the other main tasks is in acquisition of the resource 3, the exclusive control function 10 notifies the main task executing function 9 that the resource 3 is already being acquired, whereupon the main task executing function 9 starts executing a main task other than the requesting main task. Subsequently, when the use of the resource 3 by the other main task is complete, the exclusive control function 10 notifies the requesting main task that the resource 3 is available for acquisition. In response to this, the main task executing function 9 starts executing the requesting main task. When the requesting main task has been executed, another one of the main tasks is started to be executed.

By executing the sub-OS 7, the sub-task executing function 11 and the resource acquisition management function 12 are generated. When the AP 6 is executed in this state, the sub-task executing function 11 generates sub-tasks based on the AP 6 and causes the central processing unit 1 to sequentially execute the generated sub-tasks. The generation of the sub-task executing function 11, the resource acquisition management function 12, the sub-tasks are timed to occur when the main-task for the sub-OS 7 is executed. When one of the sub-tasks outputs a request for acquisition of the resource 3, the process of the resource acquisition management function 12 started.

Fig. 5 is a flowchart showing a process performed when the sub-task outputs a request for acquisition of the resource. Referring to Fig. 5, in step ST1, the resource acquisition management function 12 checks whether the requested resource 3 is released by the exclusive control function 10. When it is determined that the resource is released, control is turned to step ST2 wherein the resource acquisition management function 12 outputs a request for acquisition of the resource to the exclusive control function 10 so that the resource is acquired. Upon acquisition of the resource, the sub-task executing function 11 executes the sub-task that output the request for acquisition of the resource.

Step ST3 is a step executed when it is determined that the resource 3 is already acquired, whereby the sub-task executing function 11 halts the sub-task that output the request for acquisition of the resource for a predetermined period of time. The sub-task executing function 11 starts executing other sub-tasks.

When it is determined, by executing step ST1 again after step ST3, that the requested resource 3 is released by the exclusive control function 10, the acquisition step ST2 is executed so that the execution of the sub-task that waited for the resource becoming available is resumed. When the sub-task that waited for acquisition has been processed, the sub-task executing function 11 starts executing other sub-tasks. The exclusive control function 10 releases the resource 3 so that a next request for acquisition of the resource is acknowledgeable.

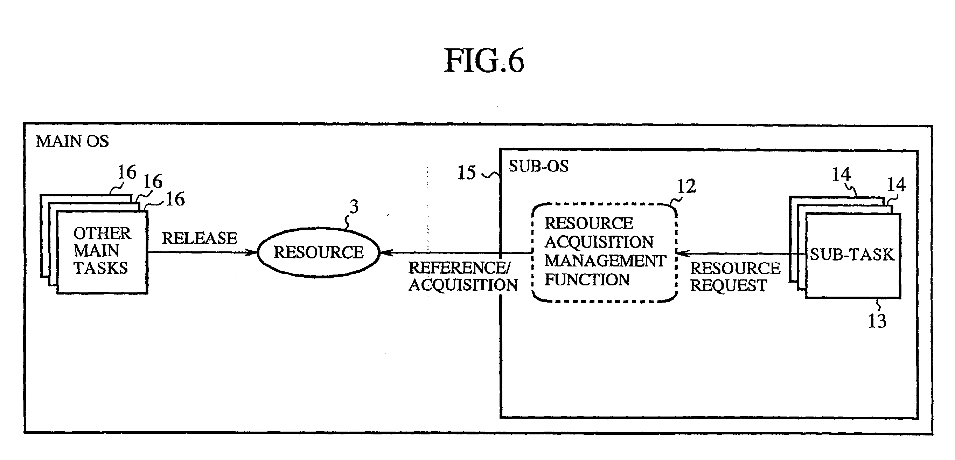

Fig. 6 is a diagram showing an operation of the computer system according to the first embodiment. Referring to Fig. 6, reference numeral 13 indicates a sub-task outputting a request for acquisition of a resource, 14 indicates other sub-tasks, 15 indicates a main task for executing the sub-OS 7 and 16 indicates other main tasks.

As shown in Fig. 6, according to the first embodiment, the sub-OS 7 provides the resource acquisition management function 12 which checks, upon a request from the sub-task for acquisition of the resource 3, whether the resource 3 is released by the exclusive control function 10 and, when it is determined that the resource 3 is released, outputs a request for resource acquisition to the exclusive control function 10. More specifically, when the sub-task executed under the sub-OS 7 outputs a request for acquisition of the resource, the resource acquisition management function 12 checks whether the requested resource 3 is being released at that point of time. Only when it is found that the resource is released, a request for acquisition of the resource is output to the exclusive control function 10. Accordingly, the main OS 5 does not control the main task 15 that runs the sub-OS 7 to be in a state in which it waits for the resource becoming available.

By ensuring that the sub-task executing function 11 continue to sequentially execute tasks other than the task that requested acquisition of the resource, these other tasks are properly executed in the main task executing the sub-OS 7.

As a result, the proper multitask operation of the multitask sub-OS 7 under the multitask main OS 5 is ensured.

### Second embodiment

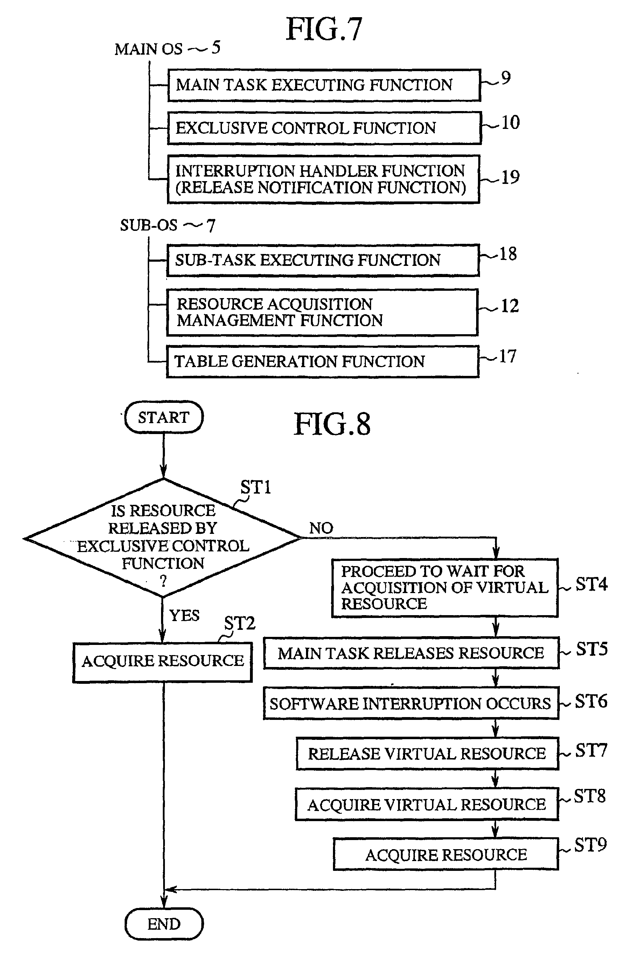

Fig. 7 is a diagram showing functions provided by a main OS and a sub-OS according to a second embodiment of the present invention. Referring to Fig. 7, reference numeral 17 indicates a table generating function for generating a sub-resource table showing acquisition and release of a virtual resource used by the AP 6, 18 indicates a sub-task executing function for generating a plurality of sub-tasks based on the AP 6, placing the sub-task that failed to acquire the resource 3 in a wait state in which the sub-task waits for the virtual resource listed in the sub-resource table becoming available for acquisition, and causing the central processing unit 1 to sequentially execute sub-tasks that are not in the wait state. Reference numeral 19 indicates an interruption handler function (release notification function) which is executed based on a software interruption generated in response to a release by the exclusive control function 10 of the resource 3, and which releases the virtual resource corresponding to the resource 3. In an initial state, all the virtual resources listed in the sub-resource table have been acquired. The other aspects of the construction of the second embodiment are the same as the corresponding aspects of the first embodiment so that the description thereof is omitted.

The operation of the computer system according to the second embodiment will now be described in detail.

Fig. 8 is a flowchart showing a process performed according to the second embodiment when a sub-task outputs a request for acquisition of a resource. Referring to Fig. 8, in step ST4, the sub-task executing function 18 causes the sub-task that failed to acquire the resource to make a transition to a wait state in which the sub-task waits for the virtual resource listed in the sub-resource table becoming available. In step ST5, the exclusive control function 10 releases the resource 3. In step ST6, the main OS 5 (exclusive control function 10) generates a software interruption for terminating the processes based on the entirety of the program, in response the release of the resource. In step ST7, the interruption handler function 19 release the virtual resource corresponding to the resource 3. In step ST8, the sub-task executing function 18 acquires the virtual resource so as to resume the execution of the sub-task in the wait state. In step ST9, the resource acquisition management function 12 confirms the release of the resource 3 and outputs a request for acquisition of the resource 3 to the exclusive control function 10. By acquiring the resource 3, the execution of the sub-task that requested the resource 3 is resumed. When the execution of the resumed sub-task is completed, the sub-task executing function 18 starts executing other sub-tasks and the exclusive control function 10 releases the resource 3. The other aspects of the operation according to the second embodiment are the same as the corresponding aspects according to the first embodiment so that the description thereof is omitted.

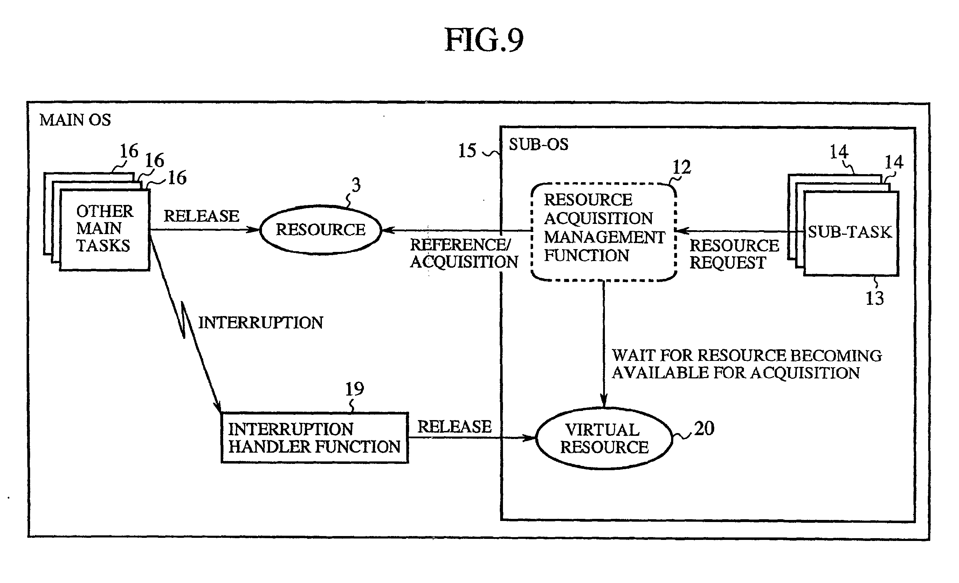

Fig. 9 is a diagram showing an operation of the computer system according to the second embodiment. Referring to Fig. 9, reference numeral 20 indicates a sub-resource table. The other reference numerals designate the same elements as those of Fig. 6 so that the description thereof is omitted.

In the second embodiment, the interruption handler function 19 notifies the sub-task executing function 18 that the resource 3 that the sub-task is waiting is released. The sub-task executing function 18 responds to the notification by resuming the execution of the sub-task that requested acquisition of the resource 3. In contrast to the first embodiment, periodical processes are not generated so that even when a large number of sub-tasks are placed in a resource wait state, a sufficient period of time is reserved for the execution of other sub-tasks. Accordingly, tasks not having requested the resource are executed efficiently. From another perspective, the first embodiment is advantageous in comparison with the second embodiment in that, by using a timer function or the like, the first embodiment is easily implemented on any main OS 5.

In the second embodiment, the sub-OS 7 provides the table generating function 17 for generating a sub-resource table 20 showing acquisition and release status of the virtual resource used by the AP 6. The sub-task executing function 18 halts the sub-task that failed to acquire the resource 3 by causing it to wait for the virtual resource listed in the sub-resource table 20 becoming available. Upon detecting a release of the virtual resource, the sub-task executing function 18 resumes the execution of the sub-task in the wait state. Upon detecting a release by the exclusive control function 10 of the resource 3, the interruption handler function 19 releases the virtual resource so that the sub-task executing function 19 is notified accordingly. Accordingly, it is not necessary to rewrite programs whenever the type of AP 6 is changed. The change in the AP type is dealt with only by modifying the sub-resource table 20. An increase or decrease in the number of virtual resources (i.e. resources 3, ultimately) is flexibly and easily accommodated.

### Third embodiment

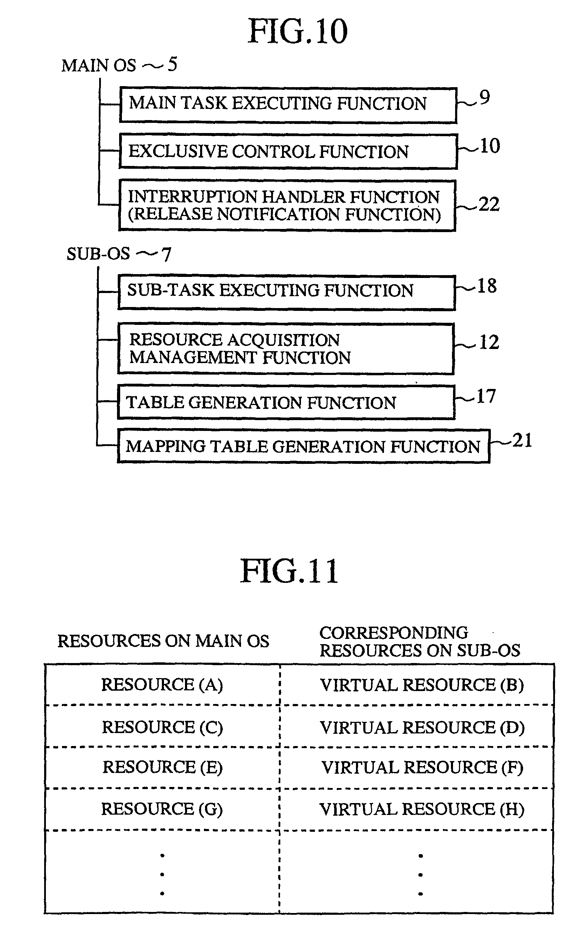

Fig. 10 is a diagram showing functions provided by a main OS and a sub-OS according to a third embodiment of the present invention. Referring to Fig. 10, reference numeral 21 indicates a mapping table generating function for generating a resource mapping table showing correspondence between the virtual resources and the resources 3, 22 indicates an interruption handler function (release notification function) executed based on a software interruption generated in response to a release by the exclusive control function 10 of the resource 3 so as to identify a virtual resource corresponding to the resource 3 based on the resource mapping table, and releasing the identified virtual resource.

Fig. 11 shows an example of resource mapping table according to the third embodiment. Referring to Fig. 11, the left column lists the resources 3, and the right column lists the virtual resources. In each row, the virtual resource is mapped into the corresponding resource 3. The other aspects of the third embodiment are the same as the corresponding aspects of the second embodiment so that the description thereof is omitted.

A description will now be given of the operation according to the third embodiment.

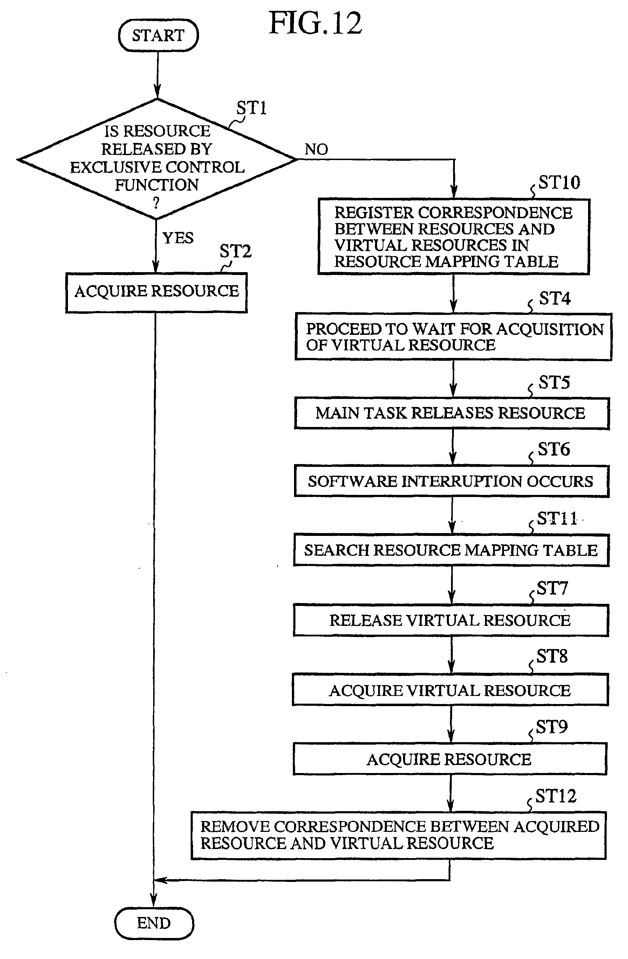

Fig. 12 is a flowchart showing a process performed according to the third embodiment when a sub-task outputs a request for acquisition of a resource. Referring to Fig. 12, in step ST10, the virtual resource sought to be acquired is registered in the resource mapping table so as to be mapped into the corresponding resource 3. In step ST11, the resource mapping table is searched based on the released resource 3. In step ST12, once the resource 3 is acquired, the resource 3 and the corresponding virtual resource are removed from the resource mapping table. In step ST7, the interruption handler function 22 refers to the resource mapping table before releasing the virtual resource corresponding to the resource 3. The other aspects of the operation are the same as the corresponding aspects of the second embodiment so that the description thereof is omitted.

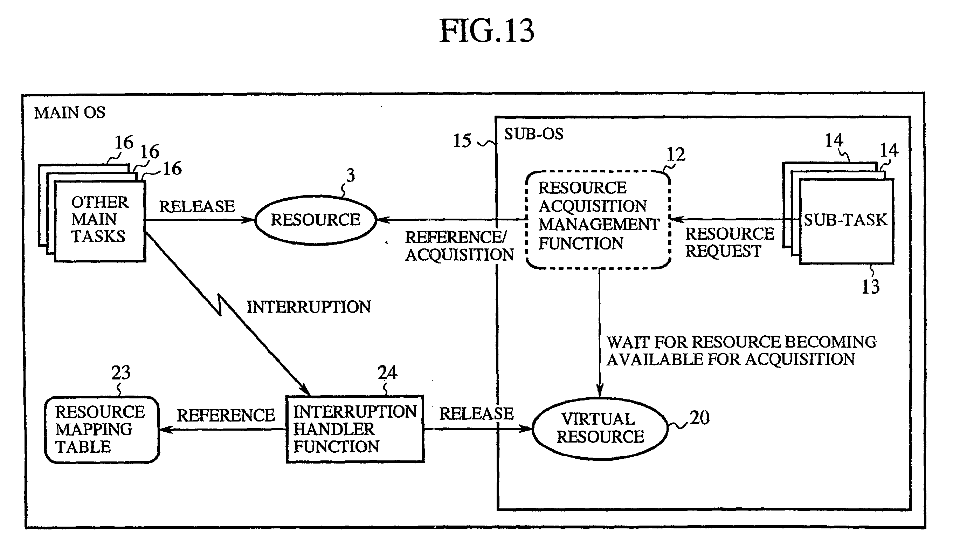

Fig. 13 is a diagram showing an operation of the computer system according to the third embodiment. Referring to Fig. 13, reference numeral 23 indicates a resource mapping table, and 24 indicates an interruption handler function. The other reference numerals designate the same elements as those of Fig. 9 so that the description thereof is omitted.

According to the third embodiment, the sub-OS 7 provides the mapping table generating function 21 for generating the resource mapping table 23 showing the correspondence between the virtual resources and the resources 3. The interruption handler function 22 identifies the virtual resource to be released based on the resource mapping table 23. Therefore, the system according to the third embodiment is flexibly adapted for absence of one-to-one correspondence between the resources 3 and the virtual resources, or increase or decrease in the number of resources 3 and virtual resources, without modifying the programs.

### Fourth embodiment

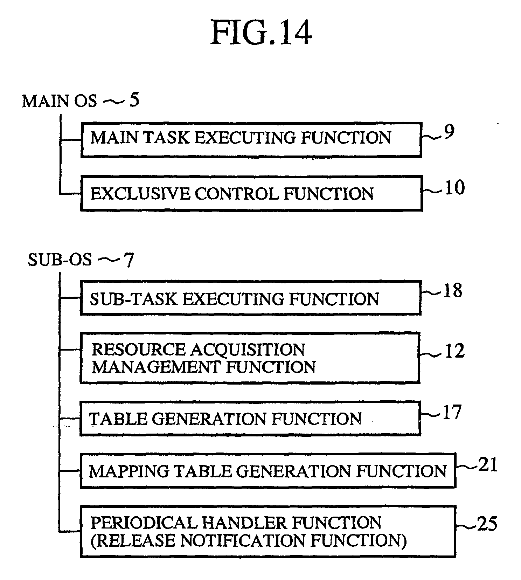

Fig. 14 is a diagram showing functions provided by a main OS and a sub-OS according to a fourth embodiment of the present invention. Referring to Fig. 14, reference numeral 25 indicates a periodical handler function (release notification function) periodically executed by the sub-OS 7 so as to identify the virtual resource corresponding to the resource 3 released by the exclusive control function 10, and releasing the identified virtual resource. The other aspects of the fourth embodiment are the same as the corresponding aspects of the third embodiment so that the description thereof is omitted.

A description will now be given of the operation according to the fourth embodiment.

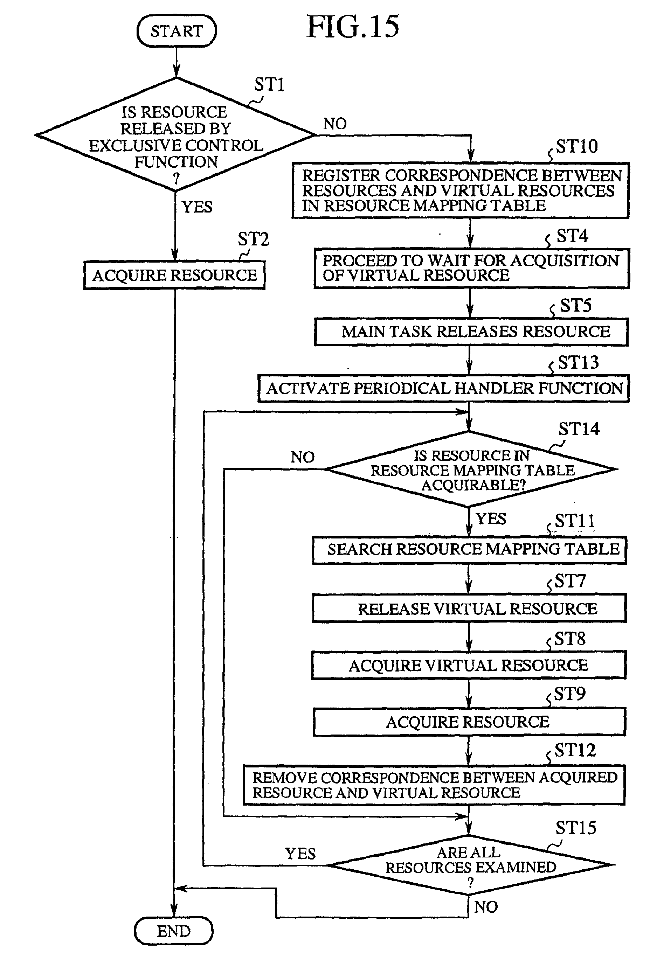

Fig. 15 is a flowchart showing a process performed according to the fourth embodiment when a sub-task outputs a request for acquisition of a resource. Referring to Fig. 15, in step ST23, the sub-OS 7 activates the periodical handler function 25. In step ST14, the periodical handler function 25 examines the resource mapping table 23 row by row so as to determine whether each of the resources 3 is released. When it is determined that the resource is released, the search step ST11, the virtual resource release step ST7, the resumption step ST8, the resource acquisition step ST9 and the removal step ST12 are executed. In step ST15, a determination is made as to whether the step ST14 is executed for all the resources 3 registered in the resource mapping table 23. When it is determined in step ST15 that the examination is complete, the periodical handler function 25 is terminated. The other aspects of the operation of the fourth embodiment are the same as the corresponding aspects of the third embodiment so that the description thereof is omitted.

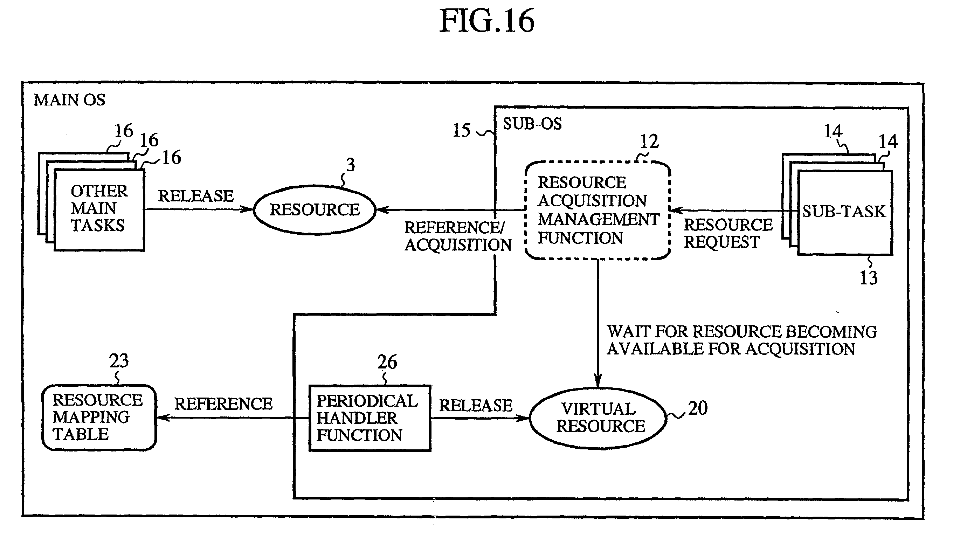

Fig. 16 is a diagram showing an operation of the computer system according to the fourth embodiment. Referring to Fig. 16, reference numeral 26 indicates a periodical handler function. The other reference numerals designate the same elements as those of Fig. 11 so that the description thereof is omitted.

According to the fourth embodiment, the periodical handler function 25 periodically executed in the sub-OS 7 releases the virtual resource corresponding to the resource 3 released by the exclusive control function 10. Accordingly, in contrast to the third embodiment, the advantage according to the fourth embodiment is available without adding any functions to the main OS 5.

An advantage of the interruption handler function 22 of the third embodiment over that of the fourth embodiment is that it is possible to execute sub-tasks efficiently because the interruption handler function 22 of the third embodiment is capable of acquiring the resource 3 immediately after the exclusive control function 10 releases the resource 3 so that the execution of the sub-task in the wait state is resumed promptly. Another advantage of the third embodiment is that since it is not necessary to perform any periodical process during the execution of the main task related to the sub-OS 7, a sufficient period of time is reserved for the execution of the sub-OS even if a large number of sub-tasks are placed in the wait state. Thereby, the sub-tasks are executed efficiently.

### INDUSTRIAL APPLICABILITY

As described, the computer system and the computer readable recording medium according to the present invention enable multitask operation of application programs run on a multitask sub-operating system executed on a main multitask operating system.

## Claims

1. A computer system comprising:
a central processing unit;
resources accessed by said central processing unit running a program under its control;
storage means storing a main operating system program, application programs and a sub-operating system program,
the main operating system program being executed by said central processing unit to provide a main task execution function that generates a plurality of main tasks and causes said central processing unit to sequentially run the plurality of main tasks,
the main operating system program also providing an exclusive control function effecting, when there is a request from the main task for acquisition of any of said resources, exclusive control on the use of said resources, by allocating said resources to the main tasks in the order of requests,
the sub-operating system program being executed as one of the main tasks under the control of the main operating system program to provide a sub-task executing function that generates a plurality of sub-tasks based on said application programs and causes said central processing unit to sequentially run the plurality of sub-tasks,
wherein
the sub-operating system program provides a resource acquisition management function for checking, when there is a request for acquisition of any of the resources from the sub-task, whether the requested resource is released by the exclusive control function and, when it is determined that the resource is released, outputs a request for acquisition of the requested resource to the exclusive control function, and wherein the sub-task executing function sequentially executes sub-tasks other than the requesting sub-task.

2. The computer system according to claim 1, wherein said sub-task executing function resumes the execution of the requesting sub-task at predetermined intervals.

3. The computer system according to claim 1, wherein one of the main operating system program and the sub-operating system program provides a release notification function notifying the sub-task executing function that the requested resource is released so that the sub-task executing function resumes the execution of the requesting sub-task in response to the notification.

4. The computer system according to claim 3, wherein
the sub-operating system program provides a table generating function that generates a sub-resource table showing acquisition and release status of virtual resources used by the application programs,
the sub-task executing function halts the sub-task that failed to acquire the resource by causing the sub-task to wait for the virtual resource listed in the sub-resource table becoming available, and resumes the execution of the sub-task upon detecting that the virtual resource is released, and
the release notification function notifies the sub-task executing function that the requested resource is released by the exclusive control function, by releasing the virtual resource.

5. The computer system according to claim 3, wherein the release notification function is periodically executed under the control of the sub-operating system program.

6. The computer system according to claim 4, wherein the release notification function is periodically executed under the control of the sub-operating system.

7. The computer system according to claim 3, wherein the release notification function is executed based on a software interruption generated in response to a release by the exclusive control function of the resource.

8. The computer system according to claim 4, wherein the release notification function is executed based on a software interruption generated in response to a release by the exclusive control function of the resource.

9. The computer system according to claim 4, wherein one of the sub-operating system program and the main operating system program provides a mapping table generating function generating a resource mapping table showing correspondence between the virtual resources and the resources, and
the release notification function identifies the virtual resource to be released based on the resource mapping table.

10. The computer system according to claim 5, wherein one of the sub-operating system program and the main operating system program provides a mapping table generating function generating a resource mapping table showing correspondence between the virtual resources and the resources, and
the release notification function identifies the virtual resource to be released based on the resource mapping table.

11. The computer system according to claim 6, wherein one of the sub-operating system program and the main operating system program provides a mapping table generating function generating a resource mapping table showing correspondence between the virtual resources and the resources, and
the release notification function identifies the virtual resource to be released based on the resource mapping table.

12. The computer system according to claim 7, wherein one of the sub-operating system program and the main operating system program provides a mapping table generating function generating a resource mapping table showing correspondence between the virtual resources and the resources, and
the release notification function identifies the virtual resource to be released based on the resource mapping table.

13. The computer system according to claim 8, wherein one of the sub-operating system program and the main operating system program provides a mapping table generating function generating a resource mapping table showing correspondence between the virtual resources and the resources, and
the release notification function identifies the virtual resource to be released based on the resource mapping table.

14. A computer readable recording medium storing programs causing a computer to provide:
a main task executing function generating a plurality of main tasks and causing a central processing unit to sequentially execute the main tasks;
an exclusive control function effecting exclusive control on the use of resources by allocating the resources to the main tasks in the order of requests when there is a request for acquisition of the resource;
a sub-task executing function generating a plurality of sub-tasks based on application programs and sequentially executing sub-tasks other than the sub-task requesting the resource; and
a resource acquisition management function checking, when there is a request for acquisition of the resource from the sub-task, whether the requested resource is released by the exclusive control function, and, when it is determined that the resource is released, outputting a request for acquisition of the resource to the exclusive control function.
